# EUROPEAN PATENT APPLICATION

(11) **EP 1 076 463 A2**
(43) Date of publication of application: **14.02.2001**
(21) Application number: 00306519.0
(22) Date of filing: 31.07.2000
(51) Int. Cl.: H04Q 3/00

(54) **Supporting network in telecommunications systems**

(30) Priority: 11.08.1999 US 372185
(71) Applicant: LUCENT TECHNOLOGIES INC., Murray Hill, New Jersey 07974-0636 (US)
(72) Inventor: Torabi, Mohammad, Naperville, IL 60656 (US)
(74) Representative: Watts, Christopher Malcolm Kelway, Dr.

(57) **Abstract**

The Supporting Network for telecommunications systems is inter-connected with the visited wireless communications network and offers a virtual home environment for subscriber requested services to subscribers' mobile terminals that are roaming within the wireless communication system. The Supporting Network treats the service provider concept as a complete network entity and not necessarily as a single or simple service platform that is bounded by the physical extent of the service platform. The deployment of the Supporting Network is possible in 3rd Generation wireless communications networks, 1^{st} and 2^{nd} Generation wireless communications networks, as well as in wireline communications networks. An essential service requirement is that roaming wireless subscribers should be able to use their mobile terminals and obtain the services for which they have subscribed, in different visited wireless communications networks, regardless of the subscribers' location in the wireless communication systems. The Supporting Network for telecommunication systems provides the desired services to the mobile subscriber terminal, directly through the inter-connection of the visited communications network with the Supporting Network. The network inter-connection is affected by the use of a unique Network-to-Network Interface protocol that enables a Supporting Network operator to become a purveyor of third generation mobile telecommunications services to subscribers who are presently served by wireless communications networks that are incapable of providing these services.

## Description

### Field Of The Invention

This invention relates to telecommunications systems and, in particular, to the concept of a Supporting Network that enables network operators and/or service providers to offer services that are not supported in their networks/platforms to their customers/subscribers.

### Problem

It is a problem in the filed of telecommunications systems for network operators and/or service providers to offer services that are not supported in their networks/platforms. In the majority of 1^{st} and 2^{nd} Generation wireless networks, the notion of Service Provider and Network Operator are synonymous. However, due to increasingly expanding deregulated consumer market, it is anticipated that these two entities of the telecommunication industry are destined to evolve into independent entities.

A typical problem encountered in telecommunications systems, such as wireless communications systems, is when a roaming subscriber enters a service area in which the service that the subscriber is authorized to receive in his/her home network is not supported by the visited network. The requested service may not be available in the visited network, it may not be economical for the visited network operator to provide the requested service, or the visited network may not be technically capable of providing the requested service on its own. In these instances, the roaming subscriber is denied the service which the subscriber has contracted to receive.

### Solution

The above described problems are solved and a technical advance is achieved by the Supporting Network for telecommunication systems which is inter-connected with the visited wireless communications network and offers a virtual home environment for subscriber requested services to subscribers' mobile terminals that are roaming within the wireless communication system. The Supporting Network treats the service provider concept as a complete network entity and not necessarily as a single or simple service platform that is bounded by the physical extent of the service platform. The deployment of the Supporting Network is possible in 3rd Generation wireless communications networks, 1^{st} and 2^{nd} Generation wireless communications networks, as well as in wireline communications networks. This Supporting Network solves the aforementioned problems, and provides the subscriber requested service to the roaming subscriber in the visited wireless communications network.

An essential service requirement for the 3^{rd} Generation systems is that wireless subscribers should be able to use their subscriber mobile terminals and obtain the services for which they have subscribed, in different visited wireless communications networks, regardless of the subscribers' location in the wireless communication systems. The Supporting Network for telecommunication systems provides the desired services to the mobile subscriber terminal, directly through the inter-connection of the visited communications network with the Supporting Network. The network inter-connection is affected by the use of a unique Network-to-Network Interface protocol that enables a Supporting Network operator to become a purveyor of third generation mobile telecommunications services to subscribers who are presently served by wireless communications networks that are incapable of providing these services.

### Brief Description Of The Drawing

Figure 1 illustrates in block diagram form the architecture of the proposed Supporting Network which is inter-connected with other wireless communications networks for third generation telecommunication systems (e.g., IMT-2000); and
Figure 2 illustrates in flow diagram of an example operation of the Supporting Network for the inter-connected telecommunications networks of Figure 1.

### Detailed Description Of The Drawings

### Definitions:

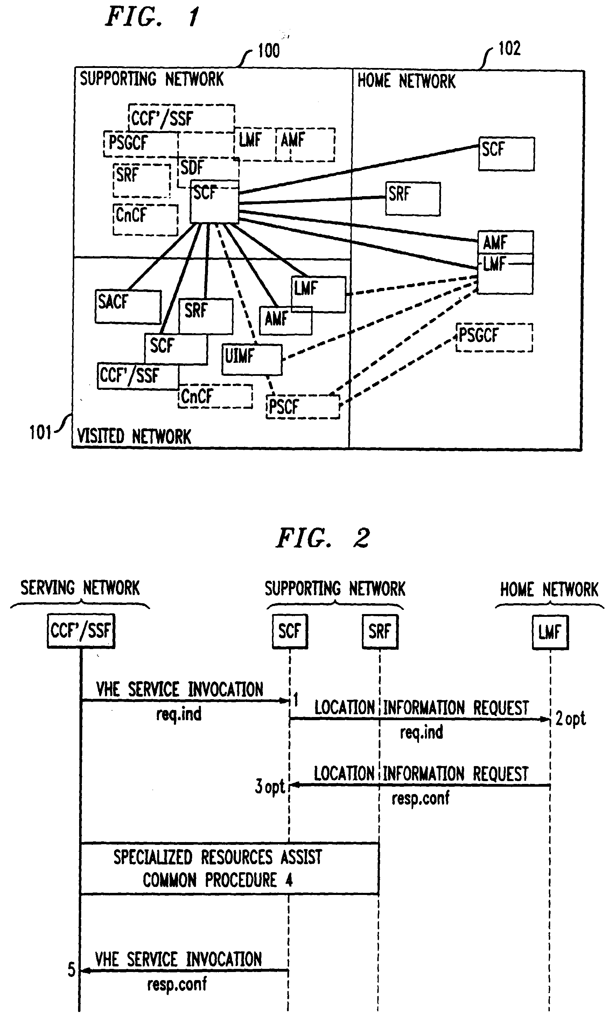

For the purpose of this description, the following definitions are provided for various terms that are used herein:
**Wireless Communications Network** is a wireless network comprised of base stations, base station control systems, and one or Mobile Switching Centers.
**Home Network** 102 as shown in Figure 1 is the wireless communications network which holds location and service profile information related to the subscriber.
**Supporting Network** 100 as shown in Figure 1 is the communications network (fixed or wireless) which provides support for a variety of services including but not limited to service logic programs and service related data for supplementary services.
**Visited (Serving) Network** 101 as shown in Figure 1 is the wireless communications network where a subscriber is presently being served.
**Interrogating Network** is the communications network (fixed or wireless) from which a routing data retrieval request is sent to the Home Network of the called subscriber.
**Destination Network** is the wireless communications network to which an outgoing call from a subscriber is destined.
**Wireless Communications System** is a system of Wireless Communications Networks (e.g., Home Networks, Supporting Networks, and Visited Networks).

### Supporting Network Inter-Connection

Figure 1 is the block diagram of the architecture of the proposed Supporting Network 100 as inter-connected with existing third generation telecommunication systems, consisting in this example of a visited network 101 and a home network 102. The Functional Entities used in Figure 1 are the existing components of a typical wireless communications network as described below. In this figure, the major Functional Entities (FE) that may be involved in inter-network communications are shown in solid boxes (e.g., SCF, LMF, AMF, and SACF).

### Functional Entities of Wireless Communications Systems

There are a plurality of functional entities implemented in wireless communication systems, and the following are noted in the description (the terminology defining well known entities in accordance with ITU-T standards), and they are exemplary of the types of entities used for deployment of the Supporting Network:
- SCF:: Service Control Function
- LMF:: Location Management Function
- AMF:: Authentication Management Function
- SDF:: Service Data Function
- SRF:: Specialized Resource Function
- CnCF:: Connection Control Function
- CCF:: Call Control Function
- SSF:: Service Switching Function
- PSCF:: Packet Service Control Function
- PSGCF:: Packet Service Gateway Control Function
- UIMF:: User Identification Module Function

### Information Flows Diagram

Figure 2 illustrates in flow diagram form the operation of a service establishment procedure from the Supporting Network 100 to a user in the Visited Network 101 within the third generation wireless telecommunications system as illustrated in Figure 1. In particular, the mobile subscriber unit can roam through a plurality of service areas which are included in a number of "networks", each of which is provisioned with a variety of services. The subscriber typically originates a wireless call from his/her present location in the Visited Network 101 to a designated destination in the Destination Network, selecting one or more features and services that the subscriber is subscribed and/or authorized to receive for this call connection. The difficulty is where the mobile subscriber unit transitions from one network ("Home Network" or "Old Visited Network") to a new serving network ('Visited Network"), and discovers that this network cannot support the services for which the mobile subscriber unit has subscribed. The requested service may not be available in the new visited wireless communication system, or it may not be economical to provide the requested service in the visited wireless communication system, or the visited wireless communication system is not capable of providing the requested service. In these instances, the roaming subscriber is denied the service which the subscriber has contracted to receive.

The proposed concept to deploy Supporting Networks for telecommunication systems overcomes this problem. It provides the desired service to the mobile subscriber unit, either through the use of resident capability in the Supporting Network 100 or by contracting out the requested service to another "Supporting Network" that has the capacity to provide the requested service.

### Visited Network Triggered Service Request

The information flows in Figure 2 show an example of the visited network triggered service request to the Supporting Network 100. A brief description of these flows is provided below.

### Signal Flow #1 (SERVICE INVOCATION request indication (req.ind.))

Triggered by the CCF'/SSF of the Visited Network 101, this flow invokes the service logic of the Service Control Function SCF in the Supporting Network 100. This trigger is per instruction and information contained in the subscriber profile, and it could be detected from any active Trigger Detection Point encountered during a call processing.

### Signal Flow #2 (USER INFORMATION REQUEST req.ind.)

Initiated by the Service Control Function SCF of the Supporting Network 100, this flow is to request information on the user's location residing in the Location Management Function LMF of the Home Network 102.

### Signal Flow # 3 (USER INFORMATION REQUEST response confirmation (resp.conf.))

This flow is from the Location Management Function LMF in the Home Network 102 to the Service Control Function SCF in the Supporting Network 100 for the user location information.

### Signal Flow #4 (A common procedure for SPECIALIZED RESOURCE ASSIST)

This common procedure is initiated by the Service Control Function SCF of the Supporting Network 100 for the Specialized Resource Function's SRF specialized resource assistance (e.g., play announcement and/or digit collection) in conjunction with the operations involving the CCF'/SSF and the user. Detailed FE-level signal flows of this common procedure should be aligned with existing Intelligent Network Application Protocol (INAP) operations and procedures.

### Signal Flow #5 (SERVICE INVOCATION resp.conf.)

This flow is from the Service Control Function SCF in the Supporting Network 100 to the CCF'/SSF in the Visited Network 101 to transfer service instructions.

### Implementation Variations

Examples similar to Figure 1 can be provided for Packet Service Control Function PSCF (of internet services), Location Management Function LMF, and Authentication Management Function AMF triggered service requests to the Supporting Network. When implemented, the Supporting Network 100 can be a full fledged network equipped with the full set of service providing functional entities that are presently available in communications networks, or it may be equipped with only a subset of these service providing functional entities. Thus, as shown in Figure 1, the Supporting Network 100 is optionally equipped with the full set of service providing functional entities. This enables the Supporting Network 100 to implement any feature that is desired and subscribed by a subscriber, and make it available at a mobile communication unit roaming outside its home network. In Figure 1, the Service Control Function (SCF) is used to interconnect the plurality of networks to exchange control information there between to serve the service logic processing and the wireless communications connections that are processed in this system of inter-connected networks. The Service Control Function SCF in conjunction with the Service Data Function SDF enables the Supporting Network 100 to provide control of the services subscribed and/or requested by a user. In the Supporting Network 100, the Service Control Function SCF is also used to query the various networks to identify a locus in these networks that can provide a service that is requested by a subscriber and for which the mobile subscriber unit is subscribed/authorized to use.

As shown in Figure 2, in operation, when a mobile subscriber unit is registered in a non-home serving network (Visited Network), the Visited Network 101 obtains subscriber's service profile in which the list of subscribed services as well as the identity and address of the subscriber's home and Supporting Networks are available. Upon receiving a request from the user for a service unavailable at the Visited Network 101, the Visited Network 101 sends an inquiry to the subscriber's Home 102 or Supporting 100 Network, depending upon the residency of the service. This inquiry is to determine whether the subscriber is subscribed and/or authorized to receive the requested service. Taking the case of service residency in the Supporting Network 100, this inquiry message can be transmitted by the Service Switching Function SSF of the Visited Network 101 (either direct or via to the Service Control Function SCF of the Visited Network) to the Service Control Function SCF of the Supporting Network 100. The inquiry message is processed in well known fashion in the Supporting Network 100 and a response message is returned to the Visited Network 101 from the Service Control Function SCF of the Supporting Network 100. Furthermore, the Service Control Function SCF of the Supporting Network 100 processes the received request by determining whether the subscriber's service request can be implemented in one of the service providing entities (servers) that are provisioned in the Supporting Network 100. If so, the data contained in the received message is used by the identified service providing entity to provide the service to the requesting subscriber.

The processing of the service requests can entail retrieving data from other sources, such as the Home Network's Location Management Function (LMF), Authentication Management function (AMF), Packet Service Control Function (PSCF), as well as the possible outsourcing of the service requests to other networks for processing. Thus, the Supporting Network 100 not only controls the implementation of the service request by processing some if not all of the request, but can also function as a service broker by transferring the processing of some or all of the service requests to other networks that are equipped to provide the requested service.

### Summary

The proposed Supporting Network for telecommunication systems provides a point of full service network to any mobile subscriber unit roaming within the systems. The services are provided, either directly through the use of its own resident capabilities or by contracting out the requested service to another network, service provider, platform, or server. The network interconnection is affected by the use of a unique Network-to-Network Interface protocol that enables a Supporting Network operator to become a purveyor of a complete set of third generation mobile telecommunications services. Considering that wireline networks and fixed terminals are special cases of mobile networks and mobile terminals, respectively, this invention is equally applicable to wireline networks and fixed terminals.

## Claims

**1.** A Supporting Network for providing wireless and/or wireline communication services to a subscriber whose mobile terminal is operational in a visited communication network that cannot provide a communication service requested by said subscriber, comprising:
means, responsive to a subscriber at said mobile terminal requesting a communication service that is unavailable in said visited communication network, for transmitting a message from said visited communication network, designating said requested service, to said Supporting Network;
means, in said Supporting Network responsive to receipt of said message designating said requested service, for identifying a service processing entity that is capable of executing said communication service; and
means, in said Supporting Network, for transmitting data to said service processing entity to execute said communication service.

**2.** The Supporting Network of claim 1 further comprising:
means, in said Supporting Network responsive to receipt of data from said service processing entity to execute said communication service, for transmitting said data to said visited communication network.

**3.** The Supporting Network of claim 1 wherein said means for identifying comprises:
means, responsive to said service request, for activating service providing logic,
means for requesting subscriber information residing in a Location Management Function of a Home Network for said subscriber; and
means, responsive to a Location Management Function in said Home Network transferring said requested subscriber information, for initiating specialized resource assistance to implement said requested service.

**4.** The Supporting Network of claim 3 further comprising:
means for transferring service instructions to a Service Function located in said Visited Network.

**5.** The Supporting Network of claim 1 wherein said Supporting Network is connected to at least one visited network comprising:
at least one of: 1^{st} Generation wireless communications network, 2^{nd} Generation wireless communications network, 3^{rd} Generation wireless communications network, and wireline network.

**6.** The Supporting Network of claim 1 wherein said Supporting Network provides said requested service to subscriber terminals comprising:
at least one of: fixed, mobile, and cordless terminals.

**7.** A method of operating a Supporting Network for providing wireless and/or wireline communication services to a subscriber whose mobile terminal is operational in a visited communication network that cannot provide a communication service requested by said subscriber, comprising the steps of:
transmitting, in response to a subscriber at said mobile terminal requesting a communication service that is unavailable in said visited communication network, a message from said visited communication network, designating said requested service, to said Supporting Network;
identifying, in said Supporting Network in response to receipt of said message designating said requested service, a service processing entity that is capable of executing said communication service; and
transmitting data from said Supporting Network to said service processing entity to execute said communication service.

**8.** The method of operating a Supporting Network of claim 7 further comprising the step of:
transmitting, from said Supporting Network in response to receipt of data from said service processing entity to execute said communication service, said data to said visited communication network.

**9.** The method of operating a Supporting Network of claim 7 wherein said step of identifying comprises:
activating, in response to said service request, service providing logic;
requesting subscriber information residing in a Location Management Function of a Home Network for said subscriber; and
initiating, in response to a Location Management Function in said Home Network transferring said requested subscriber information, specialized resource assistance to implement said requested service.

**10.** The method of operating a Supporting Network of claim 9 further comprising the step of:
transferring service instructions to a Service Control Function located in said Visited Network.

**11.** The method of operating a Supporting Network of claim 7 comprising:
connecting said Supporting Network to at least one visited network comprising at least one of: 1^{st} Generation wireless communications network, 2^{nd} Generation wireless communications network, 3^{rd} Generation wireless communications network, and wireline network.

**12.** The method of operating a Supporting Network of claim 7 comprising:
providing said requested service to subscriber terminals comprising at least one of: fixed, mobile, and cordless terminals.

**13.** A Supporting Network for providing wireless and/or wireline communication services to a subscriber whose mobile terminal is operational in a visited communication network that cannot provide a communication service requested by said subscriber, comprising:
Service Switching Function means of said Visited Network, responsive to a subscriber located in said visited communication network on a call connection requesting a service that said subscriber is authorized to receive for said call connection, for invoking a service request to said Supporting Network;
Service Control Function means of said Supporting Network for obtaining said requested service comprising:
means, responsive to said service request, for activating service providing logic,
means for requesting subscriber information residing in a Location Management Function of a Home Network for said subscriber,
means, responsive to a Location Management Function in said Home Network transferring said requested subscriber information, for initiating specialized resource assistance to implement said requested service; and
means for transmitting data to said Visited Network to implement said requested service for said subscriber in said Visited Network. 14. The Supporting Network of claim 13 wherein said means for transmitting comprises:
means for transferring service instructions to at least one of a Call Control Function and a Service Switching Function located in said Visited Network

**15.** The Supporting Network of claim 13 wherein said Service Switching Function means is responsive to instruction and information contained in a subscriber profile associated with said subscriber.
